# EUROPEAN PATENT SPECIFICATION

(11) **EP 1 374 599 B1**
(45) Date of publication and mention of the grant of the patent: **19.04.2006**
(21) Application number: 02715660.3
(22) Date of filing: 28.01.2002
(51) Int. Cl.: H04N 7/50, H04N 7/46

(54) **VIDEO ENCODER AND RECORDING APPARATUS**
VORRICHTUNG ZUR VIDEOKODIERUNG UND -AUFZEICHNUNG
CODEUR VIDEO ET APPAREIL D'ENREGISTREMENT

(30) Priority: 12.03.2001 EP 01200910
(43) Date of publication of application: 02.01.2004
(73) Proprietor: Koninklijke Philips Electronics N.V., 5621 BA Eindhoven (NL)
(72) Inventor: HEKSTRA, Gerben, J., NL-5656 AA Eindhoven (NL)
(74) Representative: Groenendaal, Antonius W. M.
(86) International application number: PCT/IB2002/000262
(87) International publication number: WO 2002/073974

(56) References cited:
- EP-A- 0 772 363
- US-A- 6 141 447

## Description

The invention relates to a video encoder that is designed to transform an incoming sequence of uncompressed pictures into compressed pictures, which comprises a reorder picture pool.

The invention further relates to a video recording apparatus comprising:
- capturing means for capturing video data, representing a sequence of uncompressed pictures;
- a video encoder that is designed to transform an incoming sequence of uncompressed pictures into compressed pictures, which comprises a reorder picture pool; and
- storage means for storing data, representing compressed pictures.

A video encoder of the kind described in the opening paragraph is known from the book "Video coding, an introduction to standard codecs", by M. Ghanbari, ISBN 0 85296 762 4, Pages 46-48 and 90-107.

In this book it is described that not all pictures of a video sequence should be coded in the same way, because of the conflicting requirements of random access and of highly efficient coding. Techniques are used to exploit the strong relation between successive pictures in order to considerably reduce the amount of information required to transmit or store them. These techniques, known as "prediction with motion estimation", consist of deducing most of the pictures of a sequence from preceding and even subsequent pictures, with a minimal of additional information representing the difference between the pictures. These techniques require the presence of a motion estimator in a video encoder.

In the book the following types of pictures in a video sequence are identified:
- Pictures of the first type are intra-picture coded, with a moderate compression. They are called I-pictures. I-pictures are coded without reference to another picture, but I-pictures serve as reference pictures. I-pictures contain all information necessary for their reconstruction by the decoder. They provide access points to the coded sequence for decoding.
- Pictures of the second type are inter-picture coded. They are called P-pictures. P-pictures are predictively coded with reference to the previous I-coded or P-coded pictures, using the techniques of motion compensated prediction. They themselves can be used as a reference picture, i.e. anchor, for coding of the future pictures, but since motion compensation is not perfect, it is not possible to extend very much the number of P-pictures between two I-pictures. The compression rate, i.e. degree of compression, of P-pictures is significantly higher than for I-pictures.
- Pictures of the third type are also inter-picture coded. They are called B-pictures. B-pictures can be bidirectionally or unidirectionally coded pictures. B-pictures may use past, future or combinations of both pictures in their predictions. This usage increases the motion compensation efficiency, since occlusion parts of moving objects may be better compensated from the future frame. As they are not used for coding subsequent pictures, B-pictures do not propagate coding errors. B-pictures offer the highest compression rate.

In the book "Digital Television MPEG-1, MPEG-2 and principles of the DVB system", by H. Hervé, ISBN 0 340 69190 5, Pages 36-42, it is described how P- and B-pictures can be predicted from preceding and/or subsequent pictures. In a sequence of moving pictures, moving objects lead to differences between corresponding zones of consecutive pictures, so that there is no obvious correlation between these two zones. Motion estimation consists of defining a motion vector which ensures the correlation between an arrival zone on the second picture and a departure zone on the first picture, using a technique known as block matching. This is done by moving a MacroBlock, i.e. a block of 16x16 pixels, of the current picture within a small search window from the previous picture, and comparing it to possible MacroBlocks of the window in order to find the one that is most similar. The difference in position of the two matching MacroBlocks gives a motion vector. For each MacroBlock at least one motion vector is calculated. A picture is divided in a number of MacroBlocks. The motion vectors of all MacroBlocks of one picture form a motion field. In comparing a P-picture and an I-picture, or two P-pictures, due to the temporal distance between these pictures block matching will generally not be perfect and motion vectors can be of relatively high amplitude. That is why the difference or prediction error between the actual block to be encoded and the matching block is calculated, and encoded in a similar way to the blocks of the I pictures, successively with a discrete cosine transformer, a quantizer, a run-level encoder and a variable length encoder. This process is called motion compensation.

For B pictures, motion vectors are calculated by temporal interpolation of the vectors of the closest reference pictures in three different ways, i.e. forward, backward and bi-directional; the result giving the smallest prediction error is retained, and the error is encoded in the same way as for P-pictures. Only the MacroBlocks differing from the pictures used for prediction will need to be encoded, which substantially reduces the amount of information required for coding B-pictures and P-pictures. As the size of the moving objects is generally bigger than a MacroBlock, there is a strong correlation between the motion vectors of consecutive MacroBlocks, and a differential coding method is used to encode the vectors, thus reducing the number of bits required. When the prediction does not give a usable result, for instance in the case of a moving camera where completely new zones appear in the picture, the corresponding parts of the picture are intra-picture coded, in the same way as for I-pictures.

Since B-pictures subsequently use I- pictures and P-pictures as predictions, they have to be coded later. This requires re-ordering the incoming picture sequence. In the book "Video coding, an introduction to standard codecs", by M. Ghanbari, ISBN 0 85296 762 4, Page 97 it is described that the reordering is carried out at the pre-processor, that is located at the entrance of the encoder. At the entrance of the encoder coding of B-pictures is postponed to be carried out after coding the anchor I-pictures and P-pictures, which are required for coding the B-pictures.

A disadvantage of the picture reordering is that the temporary storage of pictures for reordering requires large amounts of memory and consequently the bandwidth of the memory bus. The requirement of large amounts of memory and consequently bandwidth becomes especially a problem for High Definition (HD) video encoding.

It is a first object of the invention to provide a video encoder of the kind described in the opening paragraph that has relatively weak storage requirements for the reordering of pictures in a sequence.

It is a second object of the invention to provide a video recording apparatus comprising a video encoder that has relatively weak storage requirements for the reordering of pictures in a sequence.

The first object of the invention is achieved in that the picture reorderer, also referred to as reorder picture pool, is designed to reorder a number of the compressed pictures. Compressed pictures are smaller in storage than uncompressed pictures. A few compressed pictures at a time, in the order of three or so, are stored in the reorder picture pool, to wait for further processing at a later point in time.

An embodiment of the video encoder according to the invention is characterized in that the compressed pictures may be predictive inter-picture coded pictures or bidirectionally inter-picture coded pictures. An advantage of this embodiment is that the convergence and coherency of recursive motion estimation algorithms, such as 3D recursive search (3D-RS), is expected to improve. This is due to the fact that the pictures arrive in the video encoder in display order, and hence have small temporal differences. Note that this is not the case when the reordering takes place at the input of a video encoder. It is likely that the search window, which might be incremental, can be made smaller, and that the number of candidate motion vectors can be reduced, while obtaining a similar performance as the traditional motion estimator. A beneficial side effect of the reduced number of motion vector candidates is that the compute and memory bandwidth requirements of the motion estimation process are greatly reduced.

An embodiment of the video encoder according to the invention comprises:
- an encoder chain designed to transform uncompressed pictures into compressed pictures, having a begin and an end, and with successively: a motion estimator, a discrete cosine transformer, a quantizer, and a run-level encoder;
- a decoder chain designed to transform compressed pictures into uncompressed pictures, having a begin and an end, and with successively: a run-level decoder, an inverse quantizer, an inverse discrete cosine transformer, and a motion compensator;
- a variable length encoder; and
- the reorder picture pool located between the end of the encoder chain and the begin of the decoder chain.

In this embodiment, which is strongly influenced by the architecture under consideration, the location of the reorder picture pool is after the run-level encoder (RLE), and before the variable-length encoder (VLE). The location of the reorder picture pool can be practically anywhere in the encoder chain, which runs from discrete cosine transformer (DCT) to the variable length encoder (VLE). If it is placed at the VLE end, this implies a small storage, but corresponding large computational effort for decompression. Likewise, when placed closer to the DCT, this implies less computational effort, but larger storage requirements. Proprietary embedded compression and de-compression techniques, both lossless and lossy, can be applied to reduce storage requirements further, for a given location of the reorder picture pool in the encoder chain. The choice of the location has impact on the type and complexity of the embedded compression algorithm. The variable length encoder can be designed to perform e.g. Huffman coding or Arithmetic coding.

An embodiment of the video encoder according to the invention is designed to re-code at least one of the predictive inter-picture coded pictures into a bidirectionally inter-picture coded picture. Uncompressed pictures are transformed to compressed bidirectionally inter-picture coded pictures in two phases. In a first pass uncompressed pictures are transformed to predictive inter-picture coded pictures. In a second pass these latter pictures can be transformed to bidirectionally inter-picture coded pictures. This will be explained in more detail below. In the first pass, the incoming uncompressed pictures are compressed as a stream of I-pictures, P-pictures, and B_{forward}-pictures, where we define B_{forward}-pictures as B-pictures with only forward prediction from the previous reference picture. Note that the P-pictures and B_{forward}-pictures are similar in structure, but are different in use: the P-pictures may serve as reference pictures, while B_{forward}-pictures may not, but become bidirectionally inter-picture coded pictures later on. For example, if the intended group of pictures (GOP) structure is {I, B, B, P, B, B, P}, then the pictures are encoded in the first pass as {I, B_{forward}, B_{forward}, P, B_{forward}, B_{forward}, P}. These compressed pictures are temporarily stored in the reorder picture pool. The reordering is performed on these compressed pictures. The I- and P-pictures, which also form the reference pictures, leave the reorder picture pool first, while the B_{forward} pictures that lie in between follow after, but not before they have been recoded as B pictures. The compressed I-pictures and P-pictures, that form the reference pictures, are taken from the reorder picture pool, when needed, decompressed and stored in a reference picture pool, which has place for required forward and backward reference pictures. In the second pass, the stored B_{forward}-pictures are regenerated by extracting them from the reorder picture pool and decompressing them by means of the decoder chain. The regenerated B_{forward}-pictures are then encoded as B-pictures, with added backward prediction. The backward prediction is done from the future reference picture, which has been extracted before, and is present in the reference picture pool. Optionally the forward prediction is renewed. This can be beneficial because in the second pass information from other vector fields can be incorporated resulting in a better motion estimation. Motion vectors are calculated by temporal interpolation of the closest reference pictures in three different ways, i.e. forward, backward and bi-directional; the result giving the smallest prediction error is retained. The thus created B pictures are then compressed again by means of the encoder chain and flow through the reorder picture pool. The output of the reorder picture pool is in transmission order. For example, using the previously mentioned GOP structure, the transmission output order is {I, P, B, B, P, B, B}. The pictures that leave the picture reorder pool are optionally compressed further by the variable-length encoder to form a bit-stream. Note that, for faithful regeneration, the quality of the B_{forward}-pictures must be high enough. This implies a fine quantization, which could differ from that of the I-, P-, and B-pictures which are sent out for transmission.

It is an advantage of this embodiment that there is a freedom to choose the position of the reference pictures, after the initial first pass. Compressed pictures, arriving in the reorder picture pool, which were initially assigned as P, can be re-assigned as B_{forward} to extend the prediction depth. The reverse, to reassign B_{forward} as P-picture, and to fix it as a reference picture, also holds. During the compression, more statistical information is gained about the picture, which can be put to advantage in making these decisions. Statistical information is related to e.g. the sizes of the motion vectors and the prediction error.

It is an other advantage of this embodiment that the degree of compression can be relatively high. It is possible to skip the second pass and to send the B_{forward}-pictures directly through the reorder picture pool to the variable-length encoder. This type of encoding is at least known for {I, B_{forward}, P, B_{forward}, P, ....} sequences. The degree of compression of B_{forward} -pictures might be higher than for the P-pictures, resulting in an overall higher degree of compression than with equal degree of compression.

An embodiment of the video encoder according to the invention is designed to re-code at least one of the predictive inter-picture coded pictures into a predictive inter-picture coded picture by adapting the predictive inter-picture coding. In the second pass information from other vector fields can be incorporated resulting in a better motion estimation. Besides that the predictive inter-picture coding can be adapted by means of requantization. The advantage of requantization is that it enables to adapt to the available bits to be allocated per picture. The quantizer can make use of statistical information, gained during the first pass compression, to adaptively vary the quantization over the picture. This enables to attain good coding efficiency and even quality.

An embodiment of the video encoder according to the invention is designed to perform MPEG encoding on the uncompressed pictures resulting in compressed pictures. Various types of MPEG encoding can be performed by various embodiments each according to the invention, e.g. MPEG-1, MPEG-2 or MPEG-4.

An embodiment of the video encoder according to the invention is designed to adapt the number of compressed pictures, having a degree of compression and that may be simultaneously stored in the reorder picture pool by varying the degree of compression of the compressed pictures. The amount of required memory for the reorder picture pool depends on:
- the size of the uncompressed pictures,
- the number of consecutive B-pictures between the I- and P-pictures, also called prediction depth, and
- the degree of compression of the compressed pictures.
If the available memory for the reorder picture pool is fixed then it is possible to vary the degree of compression of the compressed pictures in order to increase the number of pictures that can be stored simultaneously. Most encoders are limited to at most two consecutive B-pictures. With this embodiment of the video encoder according to the invention the number of consecutive B-pictures transmitted between the I- and P-pictures can be increased. The size of the compressed pictures can be influenced by, for example, the level of quantization, with a trade-off to quality.

An embodiment of the video encoder according to the invention is designed to be able to select which of the following types of re-coding has to be applied:
- re-coding predictive inter-picture coded pictures into bidirectionally inter-picture coded pictures;
- re-coding predictive inter-picture coded pictures into bidirectionally inter-picture coded pictures including a renewed forward prediction; or
- re-coding predictive inter-picture coded pictures into predictive inter-picture coded pictures by adapting the predictive inter-picture coding.

This embodiment lends itself to run-time scalability, i.e. being parameterized to have different solutions with different properties. This embodiment of the video encoder can switch in run-time between the different types of re-coding each of which sets a point in the space of compute performance, memory requirements, memory bandwidth, power, coding efficiency, and quality. Besides this run-time scalability it is also possible to incorporate cheaper versions of the encoder chain and decoder chain, e.g. non-compliant DCT and likewise, requiring less compute performance or bandwidth, at the cost of, perhaps, quality. It is advisable to hold the internal decoding of the reference pictures is performed compliant to coding standards.

The second object of the invention is achieved in that the video recording apparatus comprises a video encoder that is designed to transform an incoming sequence of uncompressed pictures into compressed pictures, which comprises a reorder picture pool,
**characterized in** that the reorder picture pool is designed to reorder a number of compressed pictures.

These and other aspects of the video encoder and of the video recording apparatus according to the invention will become apparent from and will be elucidated with reference with respect to the implementations and embodiments described hereinafter and with reference to the accompanying drawings, wherein:
Fig. 1 schematically shows an embodiment of the video encoder;
Fig. 2 schematically shows an example of a group of pictures;
Fig. 3 illustrates the two pass prediction;
Fig. 4 schematically shows instances of data types in the context of a motion estimator; and
Fig. 5 schematically shows elements of the video recording apparatus.

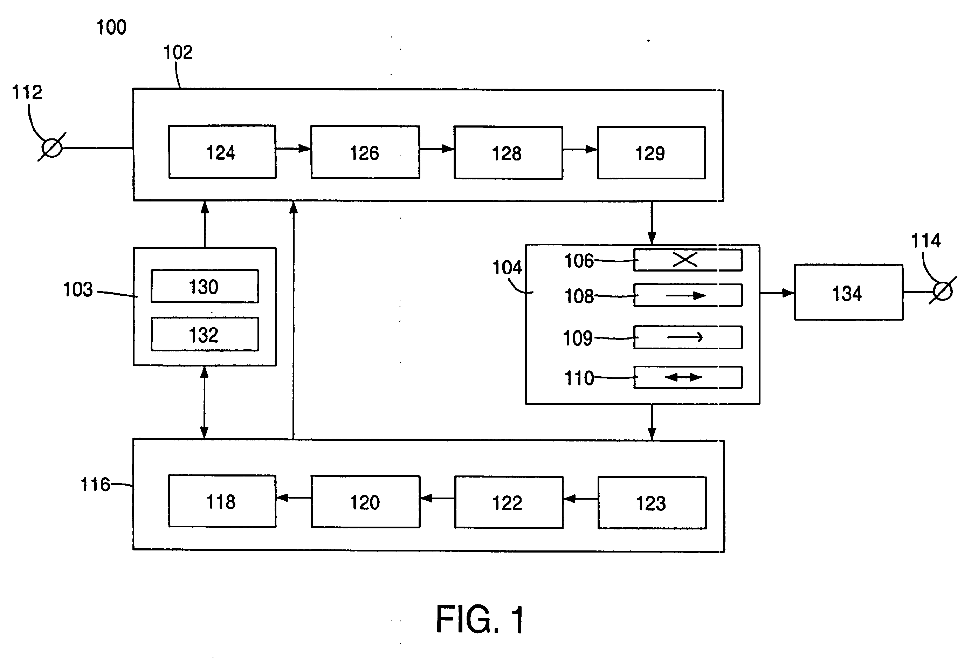

Fig. 1 schematically shows an embodiment of the video encoder 100 that is designed to transform an incoming sequence of uncompressed pictures into compressed pictures. The video encoder 100 comprises:
- an encoder chain 102 having a begin and an end, and with successively: a motion estimator 124, a discrete cosine transformer 126; a quantizer 128, and a run-level encoder 129;
- a decoder chain 116 having a begin and an end, and with successively: a run-level decoder 123, an inverse quantizer 122, an inverse discrete cosine transformer 120, and a motion compensator 118;
- a variable length encoder 134;
- a reorder picture pool 104 located between the end of the encoder chain 102 and the begin of the decoder chain 116;
- a reference picture pool 103 to store previous reference pictures 130 and future reference pictures 132.

The reorder picture pool 104 is designed to hold a number of compressed pictures. The following types of pictures might be stored: I-pictures 106, P-pictures 108, B_{forward}-pictures 109 and B-pictures 110.

The incoming sequence of uncompressed pictures enters the video encoder 100 at its input connector 112. We describe the coding of pictures on a MacroBlock basis, i.e. blocks of 16x16 pixels. Within each picture, MacroBlocks are coded in a sequence from left to right. For a given MacroBlock, the coding mode is chosen. This depends on the picture type and the effectiveness of motion compensated prediction. Depending on the coding mode, a motion compensated prediction of the contents of the MacroBlock based on past and/or future reference pictures is formed by the motion estimator 124. These reference pictures are retrieved from the reference picture pool 103. The prediction is subtracted from the actual data in the current MacroBlock, i.e. pixels in the uncompressed picture, to form a prediction error. Note that a prediction error is a matrix of pixels. The prediction error is input for the discrete cosine transformer 126, which divides the prediction error into 8x8 blocks of pixels and performs a discrete cosine transformation on each 8x8 block of pixels. The resulting two-dimensional 8x8 block of DCT coefficients is input for the quantizer 128 which performs a quantization. Quantization mainly affects the high frequencies. The human visual system is less sensitive for picture distortions at higher frequencies. The quantized two-dimensional 8x8 block of DCT coefficients is scanned in zigzag order and converted by the run-level encoder 129 into a one-dimensional string of quantized DCT coefficients. This string represents a compressed picture. Such a compressed picture can be stored in the reorder picture pool 104 for later usage, e.g. to serve as reference picture. A compressed picture can also be converted into a variable length encoded string. This conversion is performed by the variable length encoder 134.

Besides the prediction error other information, e.g. the type of the picture and motion vector field is coded in a similar way.

Motion estimation requires reference pictures. Both previous reference pictures 130 and future reference pictures are reconstructed from compressed pictures by means of the decoder chain 116. Compressed pictures are retrieved from the reorder picture pool 104 when needed. They are successively processed by the a run-level decoder 123, the inverse quantizer 122, the inverse discrete cosine transformer 120 and the motion compensator 118. These four units perform the inverse operations related to the four units of the encoder chain 102, but in reverse order. After reconstruction the reference pictures are temporarily stored in the reference picture pool to be used for motion estimation for a subsequent uncompressed picture.

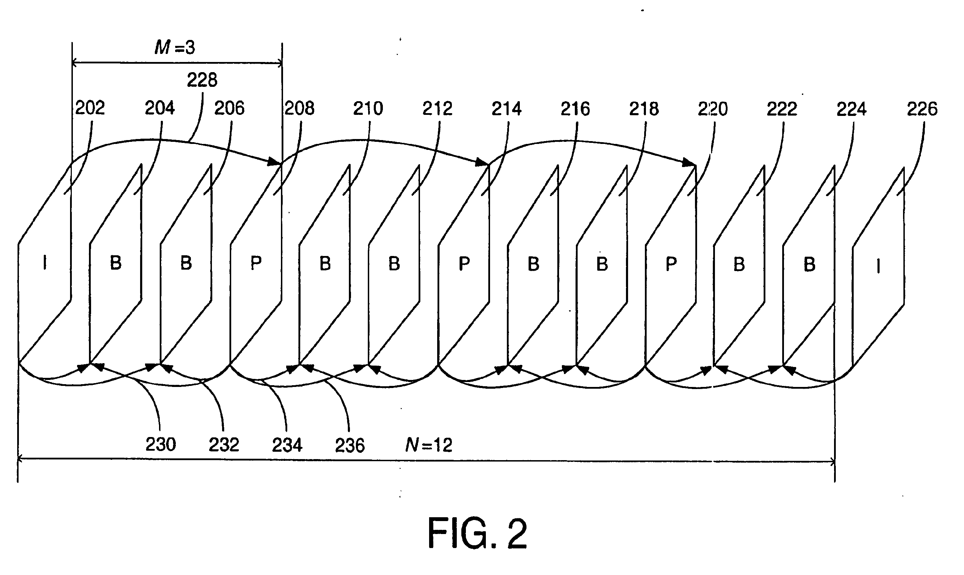

Fig. 2 schematically shows a sequence of pictures 202-226. The following types of pictures can be distinguished:
- I-pictures 202 and 226,
- P-pictures 208, 214 and 220; and
- B-pictures 204, 206, 210, 212, 216, 218, 222 and 224.

A portion of the sequence is called a group of pictures (GOP). Fig. 2 shows an example of an MPEG group of pictures (GOP) for *N*=3 and *M*=12 with:
- *N* the distance, in number of pictures, between two successive I-pictures 202 and 226, defining a GOP;
- *M* the distance, in number of pictures, between two successive P-pictures 208, 214 and 220.

The curved arrows, e.g. 228 indicate that a picture is used as reference picture to encode another picture. For example I-picture 202 is used as reference picture to predict and encode P-picture 208. P-picture 208 on its turn is used to predict P-picture 214 and to deduce the B-pictures 204, 206, 210 and 212, indicated by the curved arrows 230, 232, 234 respectively 236.

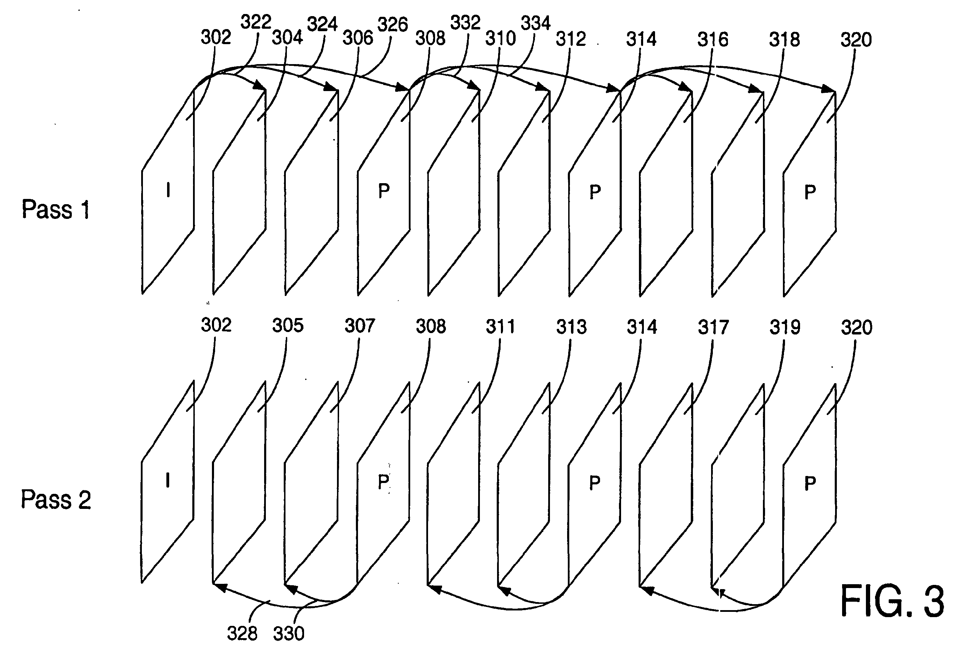

Fig. 3 schematically shows a sequence of pictures 302-320 two times:
- after a first pass, indicated with Pass 1, through the video encoder as described in Fig. 1, and
- after a second pass, indicated with Pass 2, through the video encoder as described in Fig. 1.

The following table shows which types of pictures can be distinguished after the first and after the second pass and shows the references as used in the drawing:

| Type of picture | After first pass | After second pass |
|---|---|---|
| I-picture | 302 | 302 |
| P-picture | 308, 314 and 320 | 308, 314 and 320 |
| B_{forward}-picture | 304, 306, 310, 312, 316 and 318 | |
| B-picture | | 305, 307, 311, 313, 317 and 319 |

The curved arrows, e.g. 322 indicate that a picture is used as reference picture to encode another picture. For example I-picture 302 is used as reference picture to predict and encode P-picture 308. P-picture 308 on its turn is used to deduce the B-pictures 305, 307, 310 and 312, indicated by the curved arrows 328, 330, 332 respectively 334.

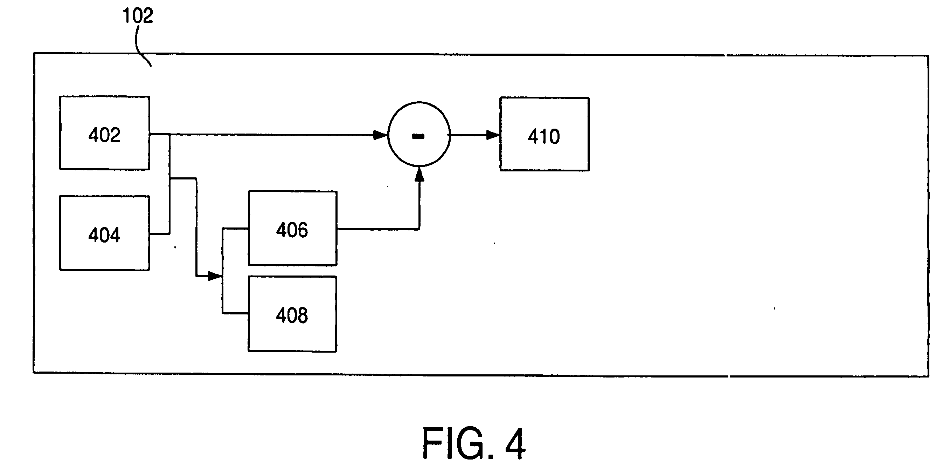

Fig. 4 schematically shows some instances of data types in the context of a encoder chain 102, related with motion estimation. The following instances are depicted:
- an uncompressed picture 402 to be compressed
- a reference picture 404
- a prediction 406
- a motion vector field 408; and
- a prediction error 410.

Based on an uncompressed picture 402 to be compressed and a reference picture 404 a prediction 406 and a motion vector field 408 are calculated. The prediction 406 is subtracted from the uncompressed picture 402. The result is a prediction error 410. The prediction error 410 and the motion vector field 408 are encoded by means of the rest of the encoder chain 102.

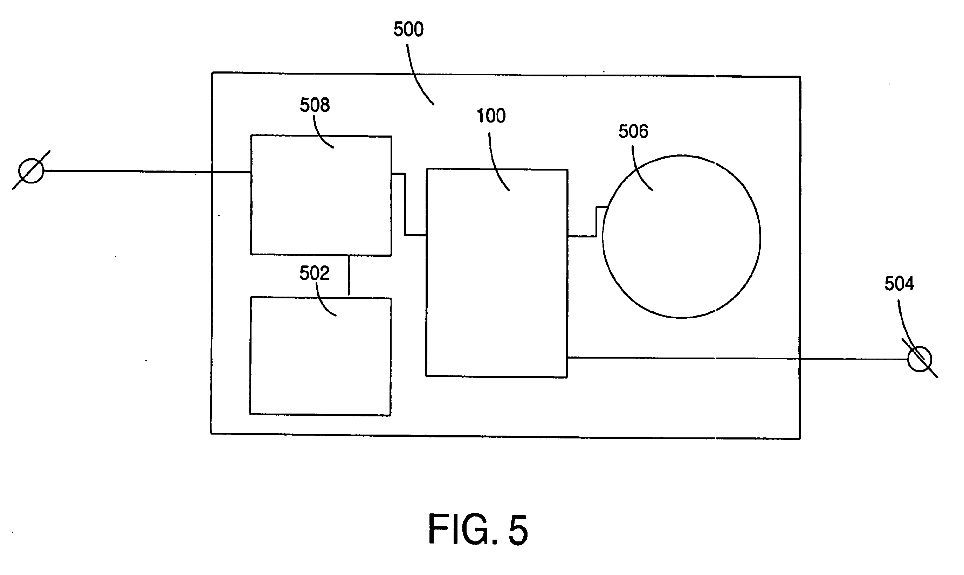

Fig. 5 shows elements of a video recording apparatus 500 according to the invention. The video recording apparatus 500 has a capturing means 508 for capturing a video signal representing images to be recorded. The video signal may be generated externally and transmitted to the video recording apparatus 500. In that case the signal may be a broadcast signal received via an antenna or cable. The video signal may be generated internally by means of a charge coupled device (CCD) 502. The video recording apparatus 500, e.g. a camcorder can be portable. The video recording apparatus 500 further has a video encoder 100 for compressing the captured video signal and a storage device 506 for storing the bit-stream representing the compressed video signal. Transmission of the compressed video signal is also possible. The compressed video signal is provided at the output connector 504. The video encoder 100 is implemented as described in Fig. 1.

It should be noted that the above-mentioned embodiments illustrate rather than limit the invention and that those skilled in the art will be able to design alternative embodiments without departing from the scope of the appended claims. In the claims, any reference signs placed between parentheses shall not be constructed as limiting the claim. The word 'comprising' does not exclude the presence of elements or steps not listed in a claim. The word "a" or "an" preceding an element does not exclude the presence of a plurality of such elements. The invention can be implemented by means of hardware comprising several distinct elements and by means of a suitable programmed computer. In the unit claims enumerating several means, several of these means can be embodied by one and the same item of hardware.

## Claims

1. A video encoder (100) that is designed to transform an incoming sequence of uncompressed pictures into compressed pictures, which comprises a picture reorderer (104), **characterized in that** the picture reorderer (104) performs the reorder operation only on said compressed pictures.

2. A video encoder (100) as claimed in Claim 1, **characterized in that** the compressed pictures may be predictive inter-picture coded pictures (108) or bidirectionally inter-picture coded pictures (110).

3. A video encoder (100) as claimed in Claim 2, **characterized in** comprising:
- an encoder chain (102) designed to transform uncompressed pictures into compressed pictures, having a begin and an end, and with successively: a motion estimator (124), a discrete cosine transformer (126), a quantizer (128), and a run-level encoder (129);
- a decoder chain (116) designed to transform compressed pictures into uncompressed pictures, having a begin and an end, and with successively: a run-level decoder (123), an inverse quantizer (122), an inverse discrete cosine transformer (120), and a motion compensator (118);
- a variable length encoder (134); and
- the picture reorderer (104) located between the end of the encoder chain (102) and the begin of the decoder chain (116).

4. A video encoder (100) as claimed in Claim 2, **characterized in** being designed to re-code at least one of the predictive inter-picture coded pictures (108) into a bidirectionally inter-picture coded picture (110).

5. A video encoder (100) as claimed in Claim 2, **characterized in** being designed to re-code at least one of the predictive inter-picture coded pictures (108) into a predictive inter-picture coded picture (108) by adapting the predictive inter-picture coding.

6. A video encoder (100) as claimed m Claim 2, **characterized in** being designed to perform MPEG encoding on the uncompressed pictures resulting in compressed pictures.

7. A video encoder (100) as claimed in Claim 2, **characterized in** being designed to adapt the number of compressed pictures, having a degree of compression and that may be simultaneously stored in the picture reorderer (104), by varying the degree of compression of the compressed pictures.

8. A video encoder (100) as claimed in Claim 2, **characterized in** being designed to be able to select which of the following types of re-coding has to by applied:
- re-coding predictive inter-picture coded pictures (108) into bidirectionally inter-picture coded pictures (110); or
- re-coding predictive inter-picture coded pictures (108) into predictive inter-picture coded pictures (108) by adapting the predictive inter-picture coding.

9. A video recording apparatus (500) comprising:
- capturing means (502) for capturing video data, representing a sequence of uncompressed pictures;
- a video encoder (100) that is designed to transform an incoming sequence of uncompressed pictures into compressed pictures, which comprises a reorder picture pool (104); and
- storage means (506) for storing data, representing compressed pictures,
**characterized in that** the picture reorderer (104) perfoms the reorder operation only on said compressed pictures.

10. A video recording apparatus (500) as claimed in Claim 9, **characterized in that** the compressed pictures may be predictive inter-picture coded pictures (108) or bidirectionally inter-picture coded pictures (110).

11. A video recording apparatus (500) as claimed in Claim 9, **characterized in that** the video encoder is designed to re-code at least one of the predictive inter-picture coded pictures (108) into a bidirectionally inter-picture coded picture (114).

12. A video recording apparatus (500) as claimed in Claim 9, **characterized in that** the video encoder is designed to re-code at least one of the predictive inter-picture coded pictures (108) into a predictive inter-picture coded picture (108) by adapting the predictive inter-picture coding.

## Patentansprüche

1. Videocodierer (100), entworfen zum Transformieren einer eintreffenden Sequenz nicht komprimierter Bilder in komprimierte Bilder, der einen Bildneuordner (104) aufweist, **dadurch gekennzeichnet, dass** der Bildneuordner (104) den Neuordnungsvorgang nur an den genannten komprimierten Bildern durchführt.

2. Videocodierer (100) nach Anspruch 1, **dadurch gekennzeichnet, dass** die komprimierten Bilder prädiktive Zwischenbild-codierte Bilder (108) oder bidirektional Zwischenbild-codierte Bilder (110) sind.

3. Videocodierer (100) nach Anspruch 2, **dadurch gekennzeichnet, dass** er di nachfolgenden Elemente umfasst:
- eine Codiererkette (102), entworfen zum Transformieren nicht komprimierter Bilder in komprimierte Bilder mit einem Anfang und einem Ende, und mit nacheinander: einem Bewegungsschätzer (124), einem diskreten Kosinustransformator (126), einem Quantisierer (128), und einem Laufpegelcodierer (129);
- eine Decoderkette (116), entworfen zum Transformieren komprimierter Bilder in nicht komprimierte Bilder, mit einem Anfang und einem Ende, und mit nacheinander: einem Laufpegeldecoder (123), einem invertierten Quantisierer (122), einem invertierten diskreten Kosinustransformator (120), und einem Bewegungskompensator (118);
- einen variable-Länge Codierer (134); und
- den Bildneuordner (104), der zwischen dem Ende der Codiererkette (102) und dem Anfang der Decoderkette (116) vorgesehen ist.

4. Videocodierer (100) nach Anspruch 2, **dadurch gekennzeichnet, dass** er entworfen ist zum Neuordnen wenigstens eines der prädiktiven Zwischenbild-codierten Bilder (108) in ein bidirektional Zwischenbild-codiertes Bild (110).

5. Videocodierer (100) nach Anspruch 2, **dadurch gekennzeichnet, dass** er entworfen ist zum Neuordnen wenigstens eines der prädiktiven Zwischenbild-codierten Bilder (108) in ein prädiktives Zwischenbild-codiertes Bild (108) durch Anpassung der prädiktiven Zwischenbildcodierung.

6. Videocodierer (100) nach Anspruch 2, **dadurch gekennzeichnet, dass** er entworfen ist zum Durchführen von MPEG-Codierung an den nicht komprimierten Bildern, was zu komprimierten Bildern führt.

7. Videocodierer (100) nach Anspruch 2, **dadurch gekennzeichnet, dass** er entworfen ist zum Anpassen der Anzahl komprimierter Bilder, mit einem Kompressionsgrad und die gleichzeitig in dem Bildneuordner (104) gespeichert werden können, durch Variierung des Kompressionsgrades der komprimierten Bilder.

8. Videocodierer (100) nach Anspruch 2, **dadurch gekennzeichnet, dass** er entworfen ist um selektieren zu können, welcher der nachfolgenden Neucodierungstypen angewandt werden soll:
- Neucodierung prädiktiver Zwischenbild-codierter Bilder (108) in bidirektionale Zwischenbild-codierte Bilder (110); oder
- Neucodierung prädiktiver Zwischenbild-codierter Bilder (108) in prädiktive Zwischenbild-codierte Bilder (108) durch Anpassung der prädiktiven Zwischenbildcodierung.

9. Videoaufzeichnungsgerät (500), das die nachfolgenden Elemente umfasst:
- Erfassungsmittel (502) zum erfassen von Videodaten, die eine Sequenz nicht komprimierter Bilder darstellen,
- einen Videocodierer (100), der entworfen ist zum Transformieren einer eintreffenden Sequenz nicht komprimierter Bilder in komprimierte Bilder, was eine Neuordnungsbilderdatei (104) umfasst; und
- Speichermittel (506) zur Speicherung von Daten, die komprimierte Bilder darstellen, **dadurch gekennzeichnet, dass** der Bilderneuordner (104) den Neuordnungsvorgang nur an den genannten komprimierten Bildern durchführt.

10. Videoaufzeichnungsgerät (500) nach Anspruch 9, **dadurch gekennzeichnet, dass** die komprimierten Bilder prädiktive Zwischenbild-codierte Bilder (108) oder bidirektional Zwischenbild-codierte Bilder (110) sind.

11. Videoaufzeichnungsgerät (500) nach Anspruch 9, **dadurch gekennzeichnet, dass** der Videocodierer entworfen ist zum Neuordnen wenigstens der prädiktiven Zwischenbild-codierten Bilder (108) in ein bidirektional Zwischenbild-codiertes Bild (110).

12. Videoaufzeichnungsgerät (500) nach Anspruch 9, **dadurch gekennzeichnet, dass** der Videocodierer entworfen ist zum Neucodieren wenigstens eines der prädiktiven Zwischenbild-codierten Bilder (108) in ein prädiktives Zwischenbild-codiertes Bild (108), indem die prädiktive Zwischenbild-Codierung angepasst wird.

## Revendications

1. Codeur vidéo (100) conçu pour transformer une séquence entrante d'images non comprimées en images comprimées, comprenant un dispositif de réordonnance d'images (104), **caractérisé en ce que** le dispositif de réordonnance d'images (104) exécute l'opération de réordonnance uniquement sur lesdites images comprimées.

2. Codeur vidéo (100) suivant la revendication 1, **caractérisé en ce que** les images comprimées peuvent être des images ayant subi un codage prédictif interimage (108) ou des images ayant subi un codage bidirectionnel interimage (110).

3. Codeur vidéo (100) suivant la revendication 2, **caractérisé en ce qu'**il comprend :
- une chaîne de codage (102) conçue pour transformer des images non comprimées en images comprimées, présentant un début et une fin, et dotée de manière successive des éléments suivants: un estimateur de mouvement (124), un dispositif de transformation en cosinus discrète (126), un quantificateur (128) et un codeur de niveau d'exécution (129);
- une chaîne de décodage (116) conçue pour transformer des images comprimées en images non comprimées, présentant un début et une fin, et dotée de manière successive des éléments suivants: un décodeur de niveau d'exécution (123), un quantificateur inverse (122), un dispositif de transformation en cosinus discrète inverse (120) et un compensateur de mouvement (118);
- un codeur de longueur variable (134), et
- le dispositif de réordonnance d'images (104) situé entre la fin de la chaîne de codage (102) et le début de la chaîne de décodage (116).

4. Codeur vidéo (100) suivant la revendication 2, **caractérisé en ce qu'**il est conçu pour recoder au moins une des images ayant subi un codage prédictif interimage (108) en une image ayant subi un codage bidirectionnel interimage (110).

5. Codeur vidéo (100) suivant la revendication 2, **caractérisé en ce qu'**il est conçu pour recoder au moins une des images ayant subi un codage prédictif interimage (108) en une image ayant subi un codage prédictif interimage (108) en adaptant le codage prédictif interimage.

6. Codeur vidéo (100) suivant la revendication 2, **caractérisé en ce qu'**il est conçu pour exécuter un codage MPEG sur des images non comprimées, donnant des images comprimées.

7. Codeur vidéo (100) suivant la revendication 2, **caractérisé en ce qu'**il est conçu pour adapter le nombre d'images comprimées, lesquelles présentent un degré de compression et peuvent être stockées simultanément dans le dispositif de réordonnance d'images (104), en faisant varier le degré de compression des images comprimées.

8. Codeur vidéo (100) suivant la revendication 2, **caractérisé en ce qu'**il est conçu de manière à être en mesure de sélectionner celui des types de recodage suivants qui doit être appliqué :
- recodage d'images ayant subi un codage prédictif interimage (108) en images ayant subi un codage bidirectionnel interimage (110); ou
- recodage d'images ayant subi un codage prédictif interimage (108) en images ayant subi un codage prédictif interimage (108) en adaptant le codage prédictif interimage.

9. Appareil d'enregistrement vidéo (500) comprenant :
- des moyens d'acquisition (502) destinés à acquérir des données vidéo, représentant une séquence d'images non comprimées;
- un codeur vidéo (100) conçu pour transformer une séquence entrante d'images non comprimées en images comprimées, laquelle comprend un dispositif de réordonnance d'images (104), et
- des moyens de stockage (504) destinés à stocker des données, représentant des images comprimées, **caractérisé en ce que** le dispositif de réordonnance d'images (104) exécute l'opération de réordonnance uniquement sur lesdites images comprimées.

10. Appareil d'enregistrement vidéo (500) suivant la revendication 9, **caractérisé en ce que** les images comprimées peuvent être des images ayant subi un codage prédictif interimage (108) ou des images ayant subi un codage bidirectionnel interimage (110).

11. Appareil d'enregistrement vidéo (500) suivant la revendication 9, **caractérisé en ce que** le codeur vidéo est conçu pour recoder au moins une des images ayant subi un codage prédictif interimage (108) en une image ayant subi un codage bidirectionnel interimage (110).

12. Appareil d'enregistrement vidéo (500) suivant la revendication 9, **caractérisé en ce que** le codeur vidéo est conçu pour recoder au moins une des images ayant subi un codage prédictif interimage (108) en une image ayant subi un codage prédictif interimage (108) en adaptant le codage prédictif interimage.
